# EUROPEAN PATENT SPECIFICATION

(11) **EP 2 339 983 B1**
(45) Date of publication and mention of the grant of the patent: **26.11.2014**
(21) Application number: 09813511.4
(22) Date of filing: 09.09.2009
(51) Int. Cl.: A61C 17/20, A61H 13/00, A61H 23/02

(54) **DEVICES TO INCREASE CRANIOFACIAL BONE DENSITY**
GERÄTE ZUR ERHÖHUNG DER KRANIOFAZIALEN KNOCHENDICHTE
DISPOSITIFS PERMETTANT D ACCROÎTRE LA DENSITÉ OSSEUSE CRÂNIO-FACIALE

(30) Priority: 09.09.2008 US 95434 P
(43) Date of publication of application: 06.07.2011
(73) Proprietor: NEW YORK UNIVERSITY, New York, NY 10012 (US)
(72) Inventor: TEIXEIRA, Christina C., New York NY 10012 (US); ALIKHANI, Mani, New York NY 10010 (US)
(74) Representative: Adamson Jones
(86) International application number: PCT/US2009/056313
(87) International publication number: WO 2010/030630

(56) References cited:
- EP-A2- 0 337 748
- US-A- 5 030 098
- US-A- 5 030 098
- US-A- 5 273 028
- US-A- 5 836 033
- US-A- 5 967 784
- US-A1- 2007 161 931
- NISHIMURA M ET AL: "Periodontal tissue activation by vibration: Intermittent stimulation by resonance vibration accelerates experimental tooth movement in rats", AMERICAN JOURNAL OF ORTHODONTICS AND DENTOFACIAL ORTHOPEDICS, MOSBY, ST. LOUIS, MO, US, vol. 133, no. 4, 1 April 2008 (2008-04-01) , pages 572-583, XP022591100, ISSN: 0889-5406, DOI: 10.1016/J.AJODO.2006.01.046 [retrieved on 2008-04-08]
- CLINTON RUBIN ET AL: "Low mechanical signals strengthen long bones", NATURE, vol. 412, no. 6847, 9 August 2001 (2001-08-09), pages 603-604, XP55023134, ISSN: 0028-0836, DOI: 10.1038/35088122

## Description

### FIELD OF THE INVENTION

The present invention relates to a method and devices to increase craniofacial bone density.

### BACKGROUND OF THE INVENTION

The skeletal system is able to react to its mechanical environment through cellular and morphological adaptations (Omar et al., "Effect of Low Magnitude and High Frequency Mechanical Stimuli on Defects Healing in Cranial Bones," J. Oral Maxillofac Surg. 66:1104-1111 (2008), Garman et al., "Low-level Accelerations Applied in the Absence of Weight Bearing Can Enhance Trabecular Bone Formation," J. Orthop. Res. 25:732-740 (2007), Rubin et al., "Mechanical Strain, Induced Non-invasively in the High-Frequency Domain, is Anabolic to Cancellous Bone, But Not Cortical Bone," Bone 30:445-452 (2002)). One of the components of this mechanical milieu that has osteogenic effect is the frequency of applied forces. It has been shown that high frequency forces, even at low magnitude, are able to stimulate bone formation and increase in bone mass. Further, it has been shown that whole body vibrations have an osteogenic potential on load bearing skeletal segments.

Vibrating plates have been designed to deliver high frequency low magnitude forces to increase whole body vibrations that have an osteogenic potential on load bearing bones (Garman et al., "Low-level Accelerations Applied in the Absence of Weight Bearing Can Enhance Trabecular Bone Formation," J. Orthop. Res. 25:732-740 (2007), Rubin et al., "Mechanical Strain, Induced Non-invasively in the High-Frequency Domain, is Anabolic to Cancellous Bone, But Not Cortical Bone," Bone 30:445-452 (2002)). For example, U.S. Patent No. 5,273,028 to McLeod et al. discloses a whole body vibration device that produces mechanical stimulation with vibration range of 10-100 Hz (and better between 10 to 50 Hz) and peak acceleration between 0.05 to 0.5 g to increase bone density in weight-bearing bones of the lower extremities and the axial skeleton. For further comfort of usage, the same design (i.e., a patient standing on a platform) was improved in U.S. Patent No. 7,202,955 to McLeod et al. Despite successes of whole body vibration in small-clinical trials, an apparent restriction is its limitation to weight bearing bones of the lower and axial skeleton by standing on a vibration plate (Garman et al., "Low-level Accelerations Applied in the Absence of Weight Bearing Can Enhance Trabecular Bone Formation," J. Orthop. Res. 25:732-740 (2007)).

To address these deficiencies, other modalities rather than high frequencies low magnitude forces have been considered for non-weight bearing bones. Some of these modalities include ultrasound (e.g., U.S. Patent No. 4,530,360 to Duarte et al.), electric fields (e.g., U.S. Patent Nos. 4,266,532; 4,266,533; and 4,315,503 all to Ryaby et al.) and magnetic fields (e.g., U.S. Patent No. 3,890,953 to Kraus et al.)(Rubin et al.," Mechanical Strain, Induced Non-invasively in the High-Frequency Domain, is Anabolic to Cancellous Bone, But Not Cortical Bone," Bone 30:445-452 (2002) and Ward et al., "Low Magnitude Mechanical Loading is Osteogenic in Children with Disabling Conditions," J. Bone Minder. Res. 19:360-369 (2004)). These techniques are using high frequency electric fields that can have piezoelectric effect but do not apply any force on the teeth. In fact, the use of high frequency ultrasound (not mechanical stimulation) to increase bone formation in dental application is suggested by U.S. Patent No. 5,496,256). The problem with these appliances is that they are complicated, expensive and they need to be custom made for each individual. The complexity of these appliances make their application as preventative and/or therapeutic modalities unpractical. In addition, the effect of high frequency mechanical stimulation on jaws has not been investigated. This is important since alveolar bone loss is a problem for millions of people.

In addition, high frequency, low magnitude forces have been proposed for use with orthodontic patients. In particular, U.S. Patent No. 7,029,276 to Mao proposes application of very heavy force (5 N) with frequency between 8 to 40Hz, directly to the band that is attach to each tooth to move the tooth more efficiently. However, Mao's design is very impractical to apply clinically, and application of such excessive forces could be destructive to supporting periodontal tissue including the bone.

The experimental study of Nishimura et al., ("Periodontal tissue activation by vibration: Intermittent stimulation by resonance vibration accelerates experimental tooth movement in rats", Am. J. Orthod. Dentofac. Orthop. 133:572-83(2008)) shows that the application of vibrational stimulation to teeth with a frequency of 60 Hz and acceleration value of 0,1 g is beneficial for acceleration of orthodontic tooth movement without additional damage to periodontal tissues.

Delivery of high frequency, low magnitude forces, with a very complex design, has been also been used to improve fracture healing time (*See, e.g.,* Wolf et al., "Effects of High-Frequency, Low-Magnitude Mechanical Stimulus on Bone Healing," Clin. Orthopaedics Rel. Res. 385:192-198 (2001); Chen et al., "The Effects of Frequency of Mechanical Vibration on Experimental Fracture Healing," Zhongua Wai Ke Za Zhi 32(4):217-219 (1994)(Chinese Article); U.S. Patent No. 6,022,349 to McLeod et al.). However, these devices have been designed for fracture stabilization and healing that is very different from the presently claimed design. Recently, an article written by Omar et al., "Effect of Low Magnitude and High Frequency Mechanical Stimuli on Defects Healing in Cranial Bones," J. Oral Maxillofac Surg. 66:1104-1111 (2008), used an appliance to deliver vibration at a frequency of 30Hz with an acceleration peak of 0.3g , which was designed by McLeod et al. (*See* U.S. Patent No. 5,273,028 to McLeod et al.). Omar et al. applied the force to accelerate bone healing process on defects in cranial bones. While this article supports the findings that high frequency forces have a capacity to increase bone healing in the cranial bones, it was not able to address how one can transfer this osteogenic stimulus to the cranial bones. In their study, Omar et al. put a cage of the mice on a vibrating plate, and while the mice lay down in the cage the vibrating plate provided the high frequency force on the bone (i.e., the 30Hz, 0.3g force). While Omar et al. were able to shorten bone healing time, they did not show that this is able to improve bone density when there is no defect in the bone.

The present invention is directed to overcoming these and other deficiencies in the art.

### SUMMARY OF THE INVENTION

One aspect of the present invention is a toothbrush. The toothbrush comprises an elongate handle, a plurality of bristles extending from the handle, a hard surfaced protrusion extending from the handle, and a source of mechanical vibration coupled to the handle. The source of mechanical vibration has a design and a position effective to permit the hard surfaced protrusion to impart to the subject's teeth a mechanical vibration having a frequency of 100 to 1000 Hz with an acceleration peak of 0.1 to 1.0 g, which produce 1 to 50 microstrain in the jaw and/or teeth.

Another aspect of the present invention is a bite plate. The bite plate comprises a surface suitable for placement in the mouth of a subject between opposed upper and lower teeth, a hard surfaced protrusion extending from the surface, and a source of mechanical vibration coupled to the surface. The source of mechanical vibration has a design and a position effective to permit the hard surfaced protrusion to impart to the subject's teeth a mechanical vibration having a frequency of 100 to 1000 Hz with an acceleration peak of 0.1 to 1.0 g, which produce 1 to 50 microstrain in the jaw and/or teeth.

Yet another aspect of the present invention is a massage device. The massage device comprises a surface suitable for placement relative to a subject jaw or teeth, a hard surfaced protrusion extending from the surface, and a source of mechanical vibration coupled to the surface. The source of mechanical vibration has a design and a position effective to permit the hard surfaced protrusion to impart to a subject's teeth a mechanical vibration having a frequency of 100 to 1000 Hz with an acceleration peak of 0.1 to 1.0 g, which produce 1 to 50 microstrain in the jaw and/or teeth.

The present invention provides a unique technique for applying high frequency, low magnitude forces to teeth to increase bone density of alveolar bone. One unique characteristic of the presently claimed designs are their practically, with the application to teeth (not bone directly), resulting in increased bone density around the teeth and adjacent bone.

In summary, there are two aspects of health of alveolar bone (i.e., bone around the tooth) that concern clinicians. First, how to *prevent* bone loss and second how to *treat* bone loss. Prevention of bone loss around teeth is the major problem in current dentistry and so far no solution has been found. This is important since bone loss will ultimately cause tooth loss, and further make the replacement of the tooth with different dental procedures such as implant, either very difficult or in some cases impossible. The design of the present invention for the first time capitalizes on established research on the osteogenic effect of high frequency forces and advances this science into the area of craniofacial skeleton. The present invention provides a non-invasive and cost effective way to improve bone quality and quantity in craniofacial area. Daily application using a simple appliance can increase the health of alveolar bone and prevent further bone loss. Furthermore, when bone loss has already occurred, this non-invasive stimulation of bone formation can help to improve the bone quantity and quality.

The current treatments for bone loss are mostly surgical procedures with application of grafts that not only are expensive, but are invasive with unpredictable results. In addition, other methods of treating bone loss, such as ultrasound or magnetic devices, are very complicated and expensive to use. The present invention not only can increase bone density without any graft but can be combined with graft material or other dental procedures (e.g. implants) to increase the chance of bone formation and a successful result. This physiological stimulation will create a milieu for bone forming cells to express maximum osteogenic effect.

### BRIEF DESCRIPTION OF THE DRAWINGS

Figures 1A and 1B are a perspective views of a toothbrush in accordance with the present invention. Figure 1A shows the toothbrush alone, while Figure 1B shows the toothbrush in use with teeth.
Figures 2A-2C are perspective views of different embodiments of the head of a toothbrush according to the present invention, where the hard surfaced protrusion is centered between the bristles (Figure 2A), partially protrudes into the bristles (Figure 2B), and is separated from the bristles (Figure 2C).
Figures 3A -3B are perspective views of a bite plate device according to the present invention.
Figures 4A and 4B are perspective views of a massage device according to the present invention exploded (Figure 4A) and assembled (Figure 4B).
Figures 5A and 5B show the use of a massage device according to the present invention on teeth.
Figures 6A-6G are perspective views of a toothbrush, bite plate, and massage device according to the present invention where the toothbrush, bite plate, and massage device are detachable from the unit housing components which drive the toothbrush, bite plate, and massage device.
Figure 7 is a partially cut-away, schematic view of the handle of a device according to the present invention to show the source of mechanical vibration.
Figures 8A and 8B are microCT images from sham and experimental maxilla. A three-dimensional rendering of decorticortomized maxillae illustrating thicker and denser trabeculae in the experimental sample (Figure 8B) is compared to the sham sample (Figure 8A).
Figures 9A and 9B are light microscopy images of sagittal sections through the maxillary teeth and bone stained with Hematoxylin and Eosin for the sham (i.e. control) samples (Figure 9A) and the experimental samples (Figure 9B).

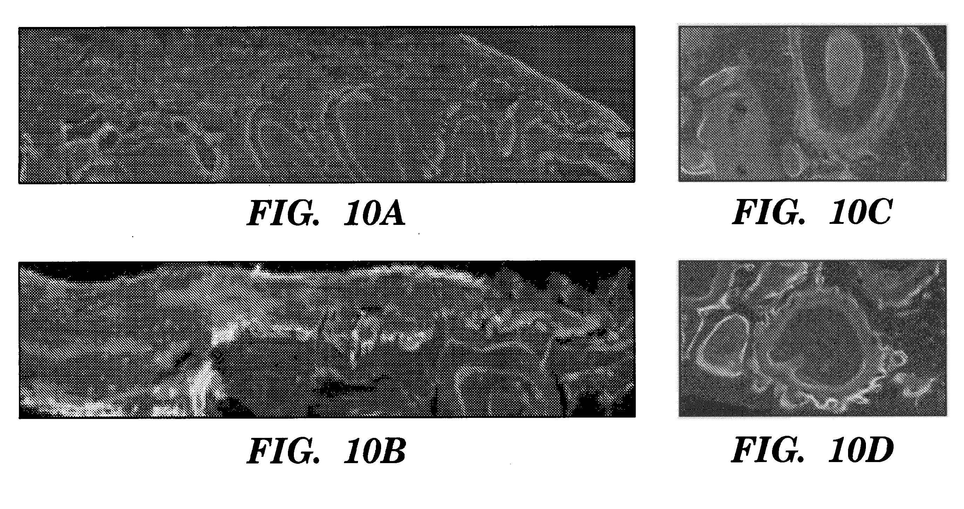

Figures 10A-10D are fluorescent microscopy images of sagittal and cross-sections through maxillary and mandibular teeth and bone. Methacrylate longitudinal (Figures 10A and 10B) and axial (Figures 10C and 10D) sections were prepared from fixed undecalcified samples and viewed under fluorescence microscopy. Figures 10A and 10C show sections from sham samples of maxilla and mandible, respectively. Figures 10B and 10D show sections from experimental samples of maxilla and mandible, respectively. Note the intense fluorescent staining in experimental samples correspond to increased osteogenesis. See Figures 10B and 10D.
Figures 11A- 11D show quantitative analysis of microCT data. Different parameters were evaluated from microCT analysis of sham and experimental maxilla samples, and graphed as percentage of change from day 0. * Significantly different from sham (p<0.05). Bone Volume Fraction (BV/TV) is shown in Figure 11A. Trabecular number (Tb.N) is shown in Figure 11B. Trabecular thickness (Tb.Th) is shown in Figure 11C. Trabecular separation (Tb.Sp) is shown in Figure 11D.
Figures 12A-12C show quantitative analysis of microCT data. In particular, the graphs show the percentage change in bone volume (Figure 12A), trabecular thickness (Figure 12B), and intertrabecular space (Figure 12C), compared with control (no treatment). Each number represents the average from 3 animals ± SD (* means significantly different from the control (p<0.05)).

### DETAILED DESCRIPTION OF THE INVENTION

It has been discovered that the application of high frequency, low magnitude forces to teeth improves bone quality and quantity in absence of any defect or injury. It is also able to accelerate bone healing processes in presence of injury or disease. Application of such forces may be accomplished by administering mechanical vibration to the teeth. Vibration is defined by physical parameters including frequency (i.e., cycles per second) and acceleration (i.e., rate of change of velocity, and in the English system, is usually measured in units of G (the average acceleration due to gravity at the earth's surface)).

Accordingly, in one embodiment of the present invention, the frequency range of the mechanical vibration applied to the bone is in the range between 100 and 1000 Hz. The acceleration peak of the vibration is between 0.1 and 1.0 g.

The resulting strain on the bone is generally defined by the amount by which bone, or in this case jaw and/or teeth, is deformed by physiologic pressure (i.e., the magnitude of strain on the bone). In bone this magnitude is measured in units of microstrain (strain x 10⁻⁶). In one embodiment of the present invention, the magnitude of the strain induced in the bone tissue is between 1 and 50 microstrain. In yet another embodiment, strain induced in the bone tissue is between 1 and 30 microstrain.

When a subject applies mechanical vibration to the teeth, hand held force (or application force) also affects the force applied to the teeth. The hand held force is that which the subject applies to the teeth when administering the mechanical vibrations. Accordingly, the hand held force applied by a subject may be between about 50 and about 500 grams, which is equal to 5cN (centi-Newton) to 5 Newton force.

In one embodiment, the subject has bone loss due to periodontal disease. It has been observed that lack of mechanical stimulation due to loss of the teeth causes significant bone loss. Application of this mechanical stimulation can replace the loss of natural stimulation and maintain/improve bone status after tooth loss and preserve alveolar bone for future tooth replacement.

In yet another embodiment, the subject has osteopenia due to aging. The present invention discloses a non-invasive mechanism and device to increase bone quality, quantity, and remodeling around the teeth and other craniofacial regions. This is important especially in patients with severe bone loss around the teeth due to periodontal disease, as noted above, and patients with osteopenia due to ageing or osteoporosis.

In another embodiment, the subject has an oral implant. In addition, application of vibration on a single tooth can spread in all directions to adjacent alveolar bone and it is not localized only under that tooth. Based on this observation, it is possible to apply the mechanical stimulation on teeth adjacent to the area where an implant has been placed and improve bone-implant reaction (osteointegration). This can help shorten the period that currently clinicians need to wait until quality of bone around implant improves enough to support loading. This is accomplished without applying force directly to the implant.

In yet another embodiment, the subject had craniofacial surgery or dental surgery. The non-invasive physiologic stimulation of the present invention can spread into adjacent bone, and will improve the healing process of bone after grafting or trauma without disturbing the surgical site. This is useful for a subject that has undergone craniofacial surgery or dental surgery (e.g., tooth extractions).

In yet another embodiment, the subject is undergoing or has undergone orthodontic treatment. Since the above-described method can increase the quality and quantity of the bone, it will help decrease retention time after orthodontic treatment where a patient needs to wear retainers for long time until bone remodels to better quality bone. It has also been shown that the rate of tooth movement is dependent on the rate of bone remodeling. Thus, delivery of high frequency, low magnitude forces during orthodontic treatment can accelerate tooth movement and, consequently, shorten duration of treatment or shorten retention time after orthodontics treatment. Delivery of high frequency, low magnitude forces to the teeth can also decrease the discomfort of the patient after orthodontic visits.

One aspect of the present invention is a toothbrush. The toothbrush comprises an elongate handle, a plurality of bristles extending from the handle, a hard surfaced protrusion extending from the handle, and a source of mechanical vibration coupled to the handle. The source of mechanical vibration has a design and a position effective to permit the hard surfaced protrusion to impart to the subject's teeth a mechanical vibration having a frequency of 100 to 1000 Hz with an acceleration peak of 0.1 to 1.0 g, which produce 1 to 50 microstrain in the jaw and/or teeth.

It should be understood that the ranges described above with respect to vibration (i.e., ranges of frequency, acceleration peak, microstrain, and hand held pressure) could be used with any aspect of the present invention including toothbrush 10 (described in detail below), bite plate 100 (described in detail below), and massage device 200 (described in detail below).

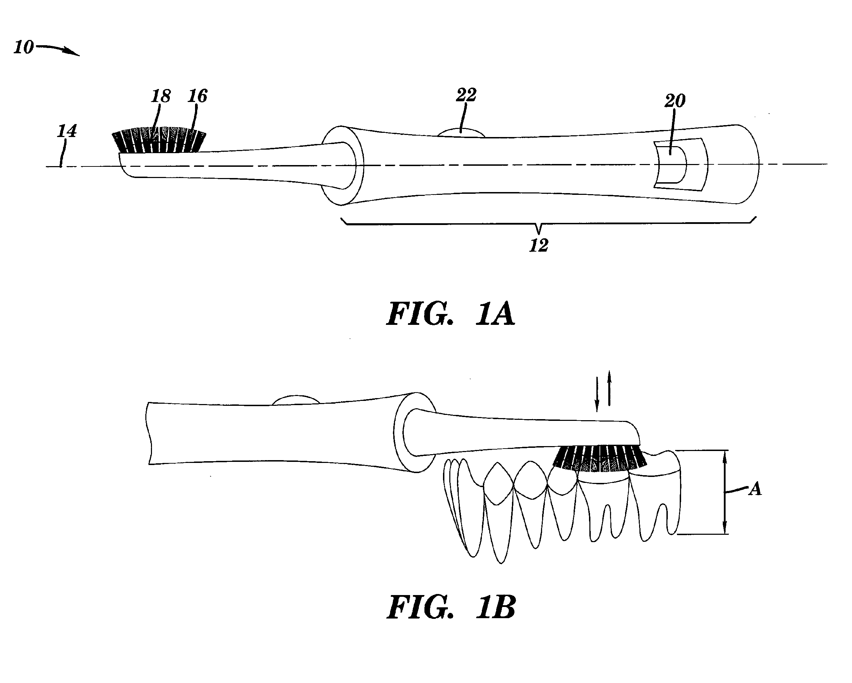

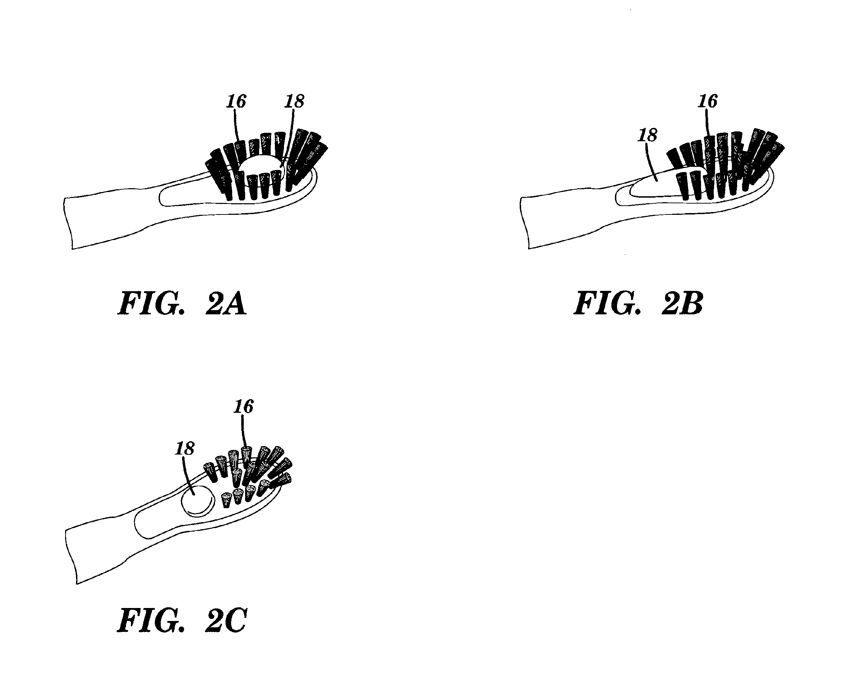

Referring now to Figure 1A, it has been discovered if a toothbrush 10 head is modified so that during cleaning hard surfaced protrusion 18 (such as a hard rubber surface) simultaneously touches a tooth surface, it will transfer a low magnitude force with high frequency to tooth A. Toothbrush 10 comprises elongate handle 12 that extends generally along longitudinal axis 14, plurality of bristles 16 extending from handle 12, hard surfaced protrusion 18 extending from handle 12, and source of mechanical vibration 20 coupled to handle 12. Source of mechanical vibration 20 may be controlled by on/off button or switch 22. Hard surfaced protrusion 18 (as illustrated in Figures 2A-2D) is able to transfer the force of the vibration to tooth A, which will be transferred to the bone indirectly. This produces enough mechanical stimulation to encourage the bone forming cells to provide stronger bone around the teeth, similar to effect of physical activity on bone density. Vibration of hard surfaced protrusion 18 and application to teeth A to increase bone density can be combined with any type of cleaning movement for bristles for increasing the efficiency of cleaning (such as circular, horizontal, vertical, or a combination thereof).

In some embodiments, source of mechanical vibration is a motorized mechanism that is housed in a hollow space within handle 12 (described in detail below).

Source of mechanical vibration 20 may produce a vibration that is horizontal, circular, vertical, or a combination thereof. As shown in Figure 1B, source of mechanical vibration 20 may produce, e.g., up and down movement in high frequency with low magnitude force. This movement can be combined with rotational movement of the brush for maximizing the cleaning capacity of the brush.

Now referring to Figures 2A-2C, hard surfaced protrusion 18 may extend from handle 12 generally in the same direction as plurality of bristles 16, but to an extent less than bristles 16. Hard surfaced protrusion 18 may be formed of, e.g., rubber, silicon rubber, plastic and/or rubber polymers and/or copolymers, latexes, and/or resins and may take the form of, e.g., a silicon rubber ball. The properties of the hard surfaced protrusion should be such that the force applied to the tooth or teeth can transfer into the bone generating between 1 and 2500 microstrain without causing discomfort or damage to bone and tooth. The pathological range is 4,000 to 5,000 microstrain.

As shown in Figures 2A-2C, hard surfaced protrusion 18 can be placed in numerous positions extending from handle 12. In one embodiment, hard surfaced protrusion 18 can protrude from the center of a plurality of bristles 16, whereby the plurality of bristles 16 surround or encircle hard surfaced protrusion 18, as shown in Figure 2A.

In another embodiment, hard surfaced protrusion 18 can be positioned to be only partially surrounded by bristles 16, as shown in Figure 2B, where bristles 16 are positioned at one end of elongate handle 12 and hard surfaced protrusion 18 extends only partially into plurality of bristles 16.

Referring to Figure 2C, in another embodiment, hard surfaced protrusion 18 is positioned separate and/or apart from bristles 16.

These designs, with bristles 16 and hard surfaced protrusion 18 on the same face of toothbrush 10, are useful for, *inter alia,* simultaneously brushing and transfer of the force and frequency generated by source of mechanical vibration 20 to the tooth.

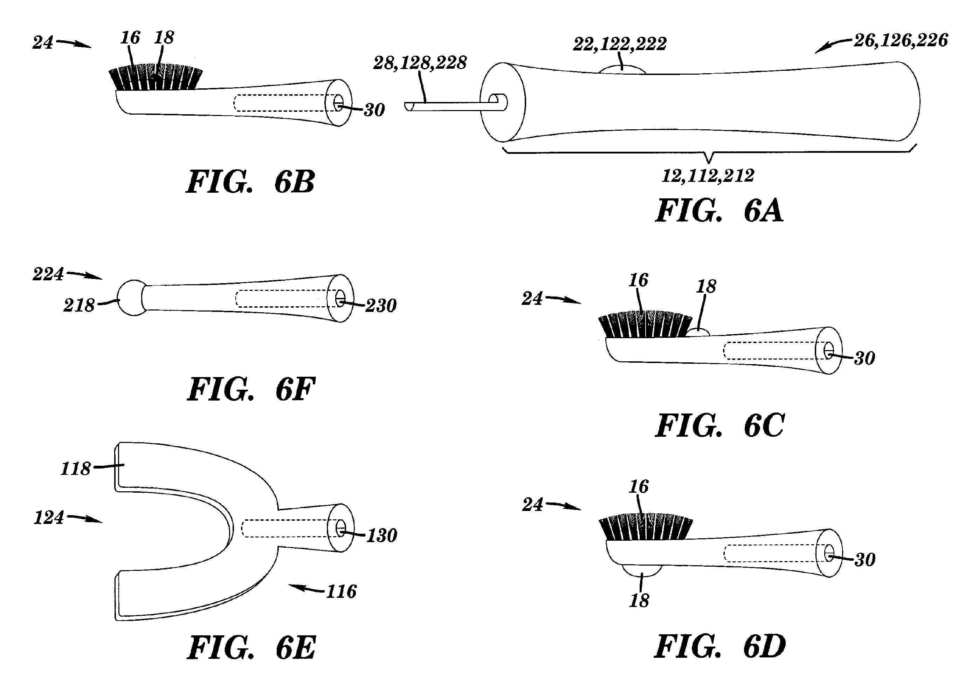

In still further embodiments, hard surfaced protrusion 18 may be positioned on the opposing face or side from bristles 16 of elongate handle 12, as shown in Figure 6D. These designs are useful for, *inter alia,* people that prefer to finish brushing first and then use their appliance to deliver high frequency low magnitude forces to their teeth.

In yet another embodiment, more than one hard surfaced protrusion may be positioned either all on the same face or on opposing faces of the elongate handle. This embodiment may include any combination of the above-noted positions of hard surfaced protrusion on the handle.

In yet another embodiment, toothbrush 10 includes an elongate handle that has a first and second portion which are detachable from one another. In this embodiment, the plurality of bristles 16 and hard surfaced protrusion 18 are attached to the first portion, while handle 12 forms the second portion.

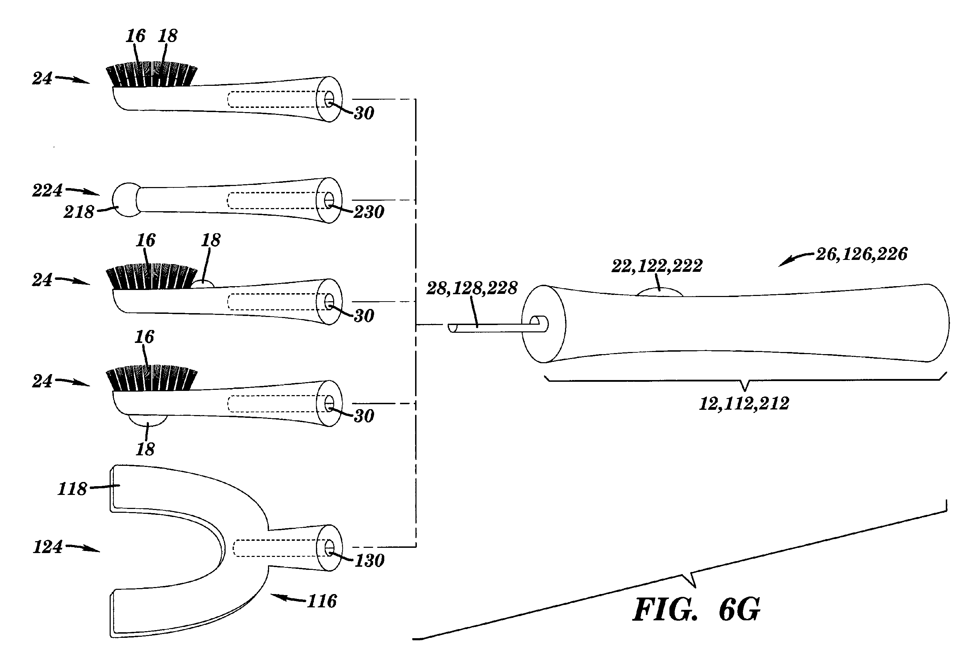

This embodiment is best described with reference to Figures 6A-6D and 6G where toothbrush 10 further comprises first portion 24 (Figures 6B-6D) that is detachable from second portion 26 (Figure 6A). In this embodiment, second portion 26 comprises handle 12, on/off switch 22, source of mechanical vibration 20, and shaft 28 for operative attachment of second portion 26 to first portion 24. First portion 24 comprises plurality of bristles 16, hard surfaced protrusion 18, and hollow shaft receiver 30 for operative attachment to second portion 26 by receiving shaft 28. Hard surfaced protrusion 18 may be in any position described in detail above, including, e.g., surrounded by bristles 16 or separate from bristles 16 on the same face or on opposing faces. In this embodiment, shaft 28 operatively engages hollow shaft receiver 30 to transfer the force produced by source of mechanical vibration 20 to the teeth through hard surfaced protrusion 18.

It will be understood that second portion 26, 126, 226 may be operatively engaged with any first portion 24, 124, 224 (as described in further detail below), as illustrated in Figure 6G.

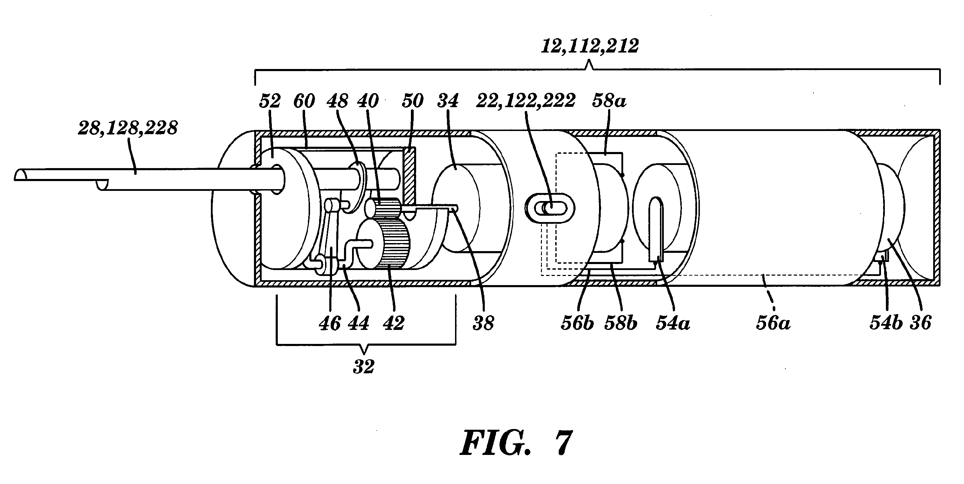

In some embodiments, source of mechanical vibration 20 may be a motor device that is housed in a hollow space within handle 12, 112 (described below), 212 (described below), as shown in Figure 7.

With reference to Figure 7, in one embodiment, source of vibration 20 includes cam and gear unit 32 that converts the spinning motion of electric motor 34 into a back and forth motion. Cam and gear unit 32 is positioned at one end of motor 34, and operatively connected to cam and gear unit 32, so that motor 34 drives cam and gear unit 32 directly. This is carried out by motor 34 turning shaft 38 and gear 40. The rotation of gear 40 turns gear 42 and shaft 44. Rotation of shaft 44, in turn, moves arm 46 up and down, causing reciprocal rotation of disc 48 and shaft 28, 128, and 228, which is mounted on wheel 50 and passes through a hole in disc 52. Wheel 50 and disc 52 are rigidly connected by cylindrical wall 60, which form an encasement of cam and gear unit 32. Operatively attached to motor 34 is rechargeable battery 36, which powers motor 34. Current passes between battery 36 and motor 34 through 54a and 54b, which are coupled to wires 56a and 56b, respectively, attached to switch 22, 122, 222. Wire 58a and 58b couple switch 22, 122, 222 to motor 34. It should be understood that the features described with respect to source of mechanical vibration 20 are also features of source of mechanical vibration 120, 220 (described below).

It will be understood by those of skill in the art that any source of mechanical vibration that can produce the frequency and magnitude force according to the present invention may be used with any aspect of the present invention including toothbrush 10, bite plate device 100 (described in detail below), and massage device 200 (described in detail below). Source of mechanical vibration 20 may be any motor which is known in the art for use with electric toothbrushes.

Another aspect of the present invention is a bite plate. The bite plate comprises a surface suitable for placement in the mouth of a subject between opposed upper and lower teeth, a hard surfaced protrusion extending from the surface, and a source of mechanical vibration coupled to the surface. The source of mechanical vibration has a design and a position effective to permit the hard surfaced protrusion to impart to the subject's teeth a mechanical vibration having a frequency of 100 to 1000 Hz with an acceleration peak of 0.1 to 1.0 g, which produce 1 to 50 microstrain in the jaw and/or teeth.

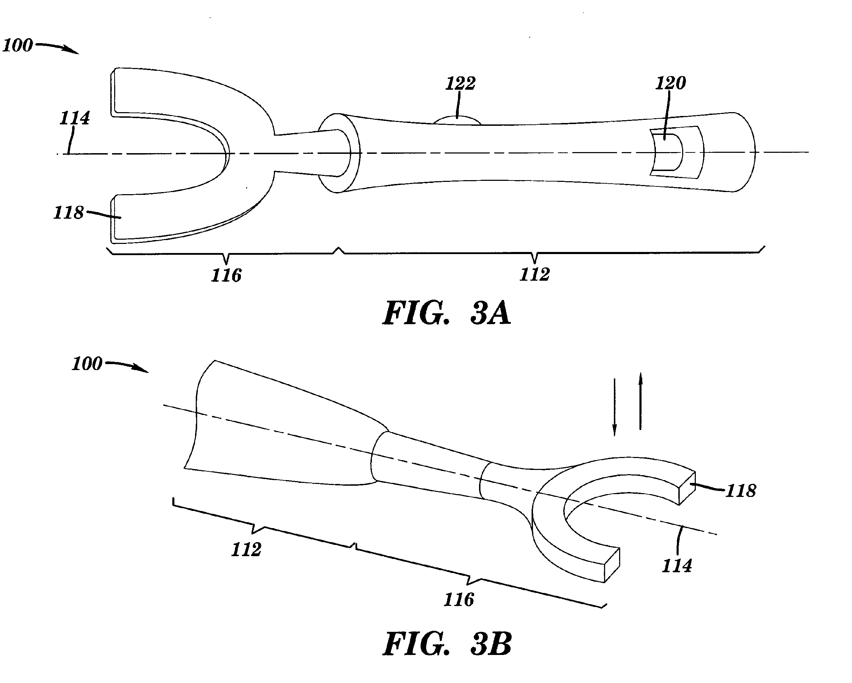

Now referring to Figure 3A and 3B, bite plate or bite plate device 100 has surface 116 suitable for placement in the mouth between upper and lower teeth. Surface 116 extends from handle 112 generally along longitudinal axis 114, as shown in Figure 3A. Hard surfaced protrusion 118 extends from surface 116 and may comprise a semicircular structure, more specifically an arch or U-shape, to be received by the upper and lower teeth. Other suitable shapes for hard surfaced protrusion 118 include any shape that may conform generally to an upper and/or lower dental arch. Bite plate 100 may be used at home (daily or weekly) for shorter period of time (e.g., 5 minutes), or in the office during dental visits for longer periods of time (e.g., 10 to 20 minutes), to improve bone quantity and quality. It should be understood that hard surfaced protrusion 118 may be made of any materials described above with respect to hard surfaced protrusion 18.

Because the method for increasing bone growth recited above is helpful in treating subjects who have undergone orthodontic treatment, it can be especially important in some instances to vibrate all the teeth at the same time. Thus, vibrating bite plate 100 can be used.

With further reference to Figures 3A, source of mechanical vibration 120 is coupled to surface 116, and is controlled by on/off button or switch 122. Source of mechanical vibration 120 is coupled to bite plate device 100, and produces vibrations of the same forces and frequencies, as described above with respect to source of mechanical vibration 20. For example, as shown in Figure 3B, source of mechanical vibration 120 may produce, e.g., up and down movement in high frequency with low magnitude force.

In yet another embodiment bite plate device 100 includes a surface that has a first and second portion which are detachable from one another. In this embodiment, hard surfaced protrusion 118 is attached to the first portion, while handle 112 forms the second portion. This embodiment is best described with reference to Figure 6. With reference to Figures 6A and 6E, one embodiment of bite plate device 100 may further comprise first portion 124 (Figure 6E) of surface 116 that is detachable from second portion 126 (Figure 6A) with handle 112. In this embodiment, second portion 126 comprises handle 112, on/off switch 22, source of mechanical vibration 120, and shaft 128 for operative attachment to first portion 124. First portion 124 comprises hard surfaced protrusion 118 and hollow shaft receiver 130 for operative attachment of first portion 124 to second portion 126. In this embodiment, shaft 128 operatively engages the hollow shaft receiver 130 to transfer the force produced by source of mechanical vibration 120 to the teeth through hard surfaced protrusion 118. See Figure 6G.

It will be understood by those in that art that such a vibrating bite plate can be made in a number of sizes including, e.g., small, medium, and large size for different size of dentition.

Yet another aspect of the present invention is a massage device. The massage device comprises a surface suitable for placement relative to a subject jaw or teeth, a hard surfaced protrusion extending from the surface, and a source of mechanical vibration coupled to the surface that has a design and a position to permit the hard surfaced protrusion to impart to a subject's teeth a mechanical vibration having a frequency of 100 to 1000 Hz with an acceleration peak of 0.1 to 1.0 g, which produce 1 to 50 microstrain in the jaw and/or teeth..

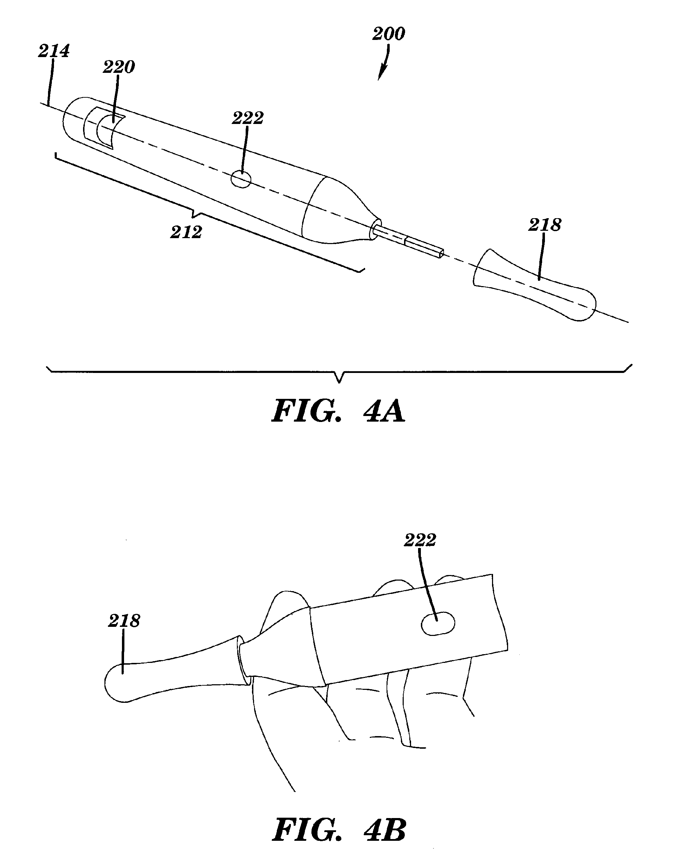

For broader usage of this stimulation in craniofacial bones, a portable vibrating massage 200 with high frequency, low magnitude of force can be used around the area of bone healing in other craniofacial regions following fracture, surgical intervention, or any other bony defects. With reference to Figures 4A-4B, massage device 200 includes handle 212 (extending along longitudinal axis 214) suitable for placement relative to a subject's jaw or teeth, hard surfaced protrusion 218 extending from handle 212, and source of mechanical vibration 220 coupled to handle 212. Source of mechanical vibration 220 is coupled to massage device 200, and produces vibrations of the same forces and frequencies, as described above.

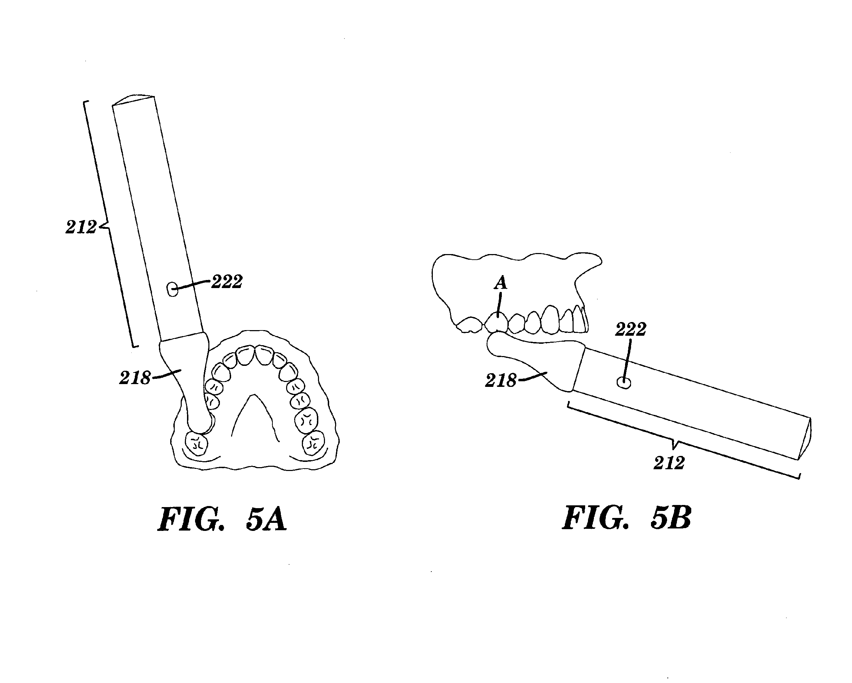

As shown in Figures 5A and 5B, massage device 200 is applied directly to individual teeth A. The same design could be used to accelerate the growth in craniofacial sutures or the mandibular condyle in children with growth deficiencies.

In some embodiments, hard surfaced protrusion 218 may be made of any materials described above with respect to hard surfaced protrusions 18, 118, and may take the form of, e.g., a rubber tip. With reference to Figure 4A, hard surfaced protrusion 218 may be removable for ease of cleaning, disinfection, or replacement.

Massage device or appliance 200 is useful for, *inter alia,* people that prefer to apply the high frequency, low magnitude force around one tooth at the time due to, e.g., dental circumstances such as losing other teeth, placement of a dental implant, and/or local periodontal disease. In operation, hard surfaced protrusion 218 will be separately contacted with individual teeth A, as shown in Figure 5A-5B, to deliver the high frequency, low magnitude force to each tooth A.

In yet another embodiment, massage device 200 has first and second portions which are detachable from one another. In this embodiment, hard surfaced protrusion 218 is part of the first portion, while handle 212 is part of the second portion. This embodiment is best described with reference to Figure 6. With reference to Figures 6A and 6F, massage device 200 further comprises first portion 224 with hard surfaced protrusion 218 that is detachable from second portion 226 with handle 212. In this embodiment, second portion 226 comprises handle 212, on/off switch 222, source of mechanical vibration 220, and shaft 228 for operative attachment to first portion 224. First portion 224 comprises hard surfaced protrusion 218 and hollow shaft receiver 230 (in a position generally parallel to longitudinal axis 214) for operative attachment to second portion 226. In this embodiment, shaft 228 operatively engages the hollow shaft receiver 230 (which is positioned generally parallel to longitudinal axis 214) to transfer the force produced by source of mechanical vibration 220 to the teeth through hard surfaced protrusion 218.

### EXAMPLES

### Example 1 - High Frequency, Low Magnitude Forces, When Applied Through the Teeth, Are Able to Increase Bone Osteogenic Activity in Both Maxilla and Mandible

The objective of the following examples was to investigate if the application of high frequency, low magnitude forces on teeth increases the density of alveolar bone. Forty-eight Spraque-Dawley rats were divided into sham (i.e. control) and experimental groups. The experimental group was subjected to daily localized vibration for 5 minutes (under inhalation anesthesia) on the occlusal surface of the maxillary and mandibular right first molar at a frequency of 120hz and 0.3g of force. The experiment was conducted for 28 days. The alveolar bone of upper and lower jaws was evaluated using microcomputed tomography (microCT) and histomorphometry.

Adult male Sprague-Dawley rats (n=48) with an average body weight of 360g (range 296-423g, 120 days of age) were placed in plastic cages supplied with an identical "good laboratory diet" and water coupled with daily veterinary supervision, lighting and air-conditioning in accordance with IACUC guidelines on housing laboratory animals.

The 48 animals were divided into two groups - sham and experimental, respectively. The sham group only received daily inhalation anesthesia (isofluorane). The experimental group received daily inhalation anesthesia and the occlusal surface of the maxillary and mandibular right first molars were subjected to vibration forces at a frequency of 120hz and an acceleration of 0.3g (peaking at a force of 5 microstrains).

The vibration device was calibrated with both an accelerometer (Xbow CXL10HF3) and copper-nickel element strain gages (Tokyo Sokki Kenkyujo Co, FRA-1-11-3LT) consolidated by a data collection system (SCXI-1000, SCXI-1531, Labview 8.0) to ensure consistency and reproducibility in the magnitude and frequency of the vibrations.

The vibrations were carried out on a daily basis and lasted a total of 28 days. Bone labeling was performed by intra-peritoneal injection of xylenol orange (90mg/kg) on day 1, calcein (15mg/kg) on day 16, and demeclocycline (25mg/kg) on day 26.

After day 28, the rats were further sustained for another 4 days without any inhalation anesthesia or vibrations in order to allow complete cellular response to the mechanical stimulus. After the 4 day rest period, all the groups were sacrificed via CO₂ narcosis and the maxillae and mandibles were dissected and fixed in formaldehyde for 48 hours before being stored in 70% ethanol.

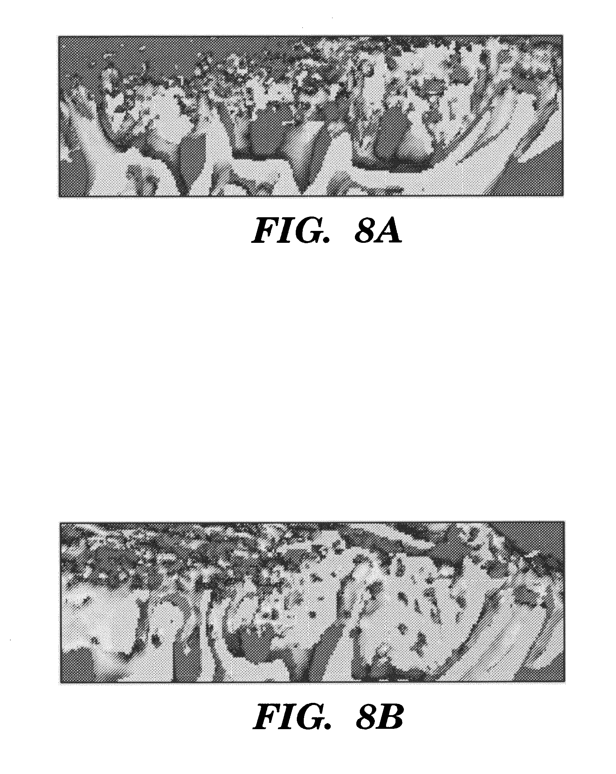

The samples were analyzed via microCT (Scanco 40) machine utilizing microCT V6.0 software on the HP open platform (openVMS Alpha Version 1.3-1 session manager) (the parameters for analysis are described in Table 1, below). The specimens were scanned at 55KVp at medium resolution at 200 slices for the whole unilateral portion of the maxilla. The integration time used was 150ms and each increment was 36µm. The area from the junction of the coronal root third to the apical root third was scanned for the bony changes at sliced sections averaging 26 slices each. Bone volume over total volume analysis was calculated using the microCT V6.0 software with a threshold of 275. MicroCT images from sham and experimental maxilla are shown in Figures 8A and 8B. The samples were consequently prepared for histological analysis.

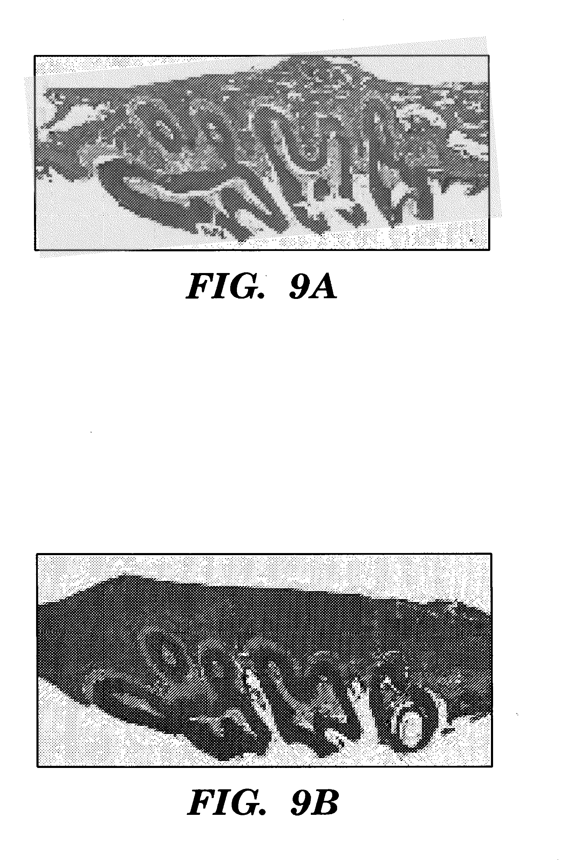

The same samples were dehydrated, embedded in paraffin, 5µm sections cut and stained with Hematoxylin & Eosin, and scanned on Scan Scope GL optical microscope (Aperio, Bristol, UK) at 10X. Light microscopy images of sagittal sections through the maxillary teeth and bone are shown in Figure 9A (for the sham samples) and Figure 9B (for the experimental samples).

Parallel samples were embedded in methacrylate, and undecalcified sections were used for fluorescent microscopy (Nikon Microscopy and NIS-Elements software). Figures 10A-10D show the fluorescent microscopy of sagittal and cross-sections through maxillary and mandibular teeth and bone. Sections of the sham sample of maxilla and mandible, respectively, are shown in Figures 10A and 10C, and sections of the experimental sample of maxilla and mandible, respectively, are shown in Figures 10B and 10D. Intense fluorescent staining shown in Figures 10B and 10D (experimental samples) corresponds to increased osteogenesis.

The analysis of different groups revealed that the experiment group had significant increase in bone quality over the same period of time when compared to the sham and control groups.

Qualitative analysis revealed increased bone remodeling activity, resulting in thicker and denser bone trabeculae, as shown in Figures 8A and 8B. In Figure 8A, microCT images show decorticortomized maxillae from sham and experimental maxilla in which thicker and denser trabeculae is shown in the experimental sample as compared to the sham sample.

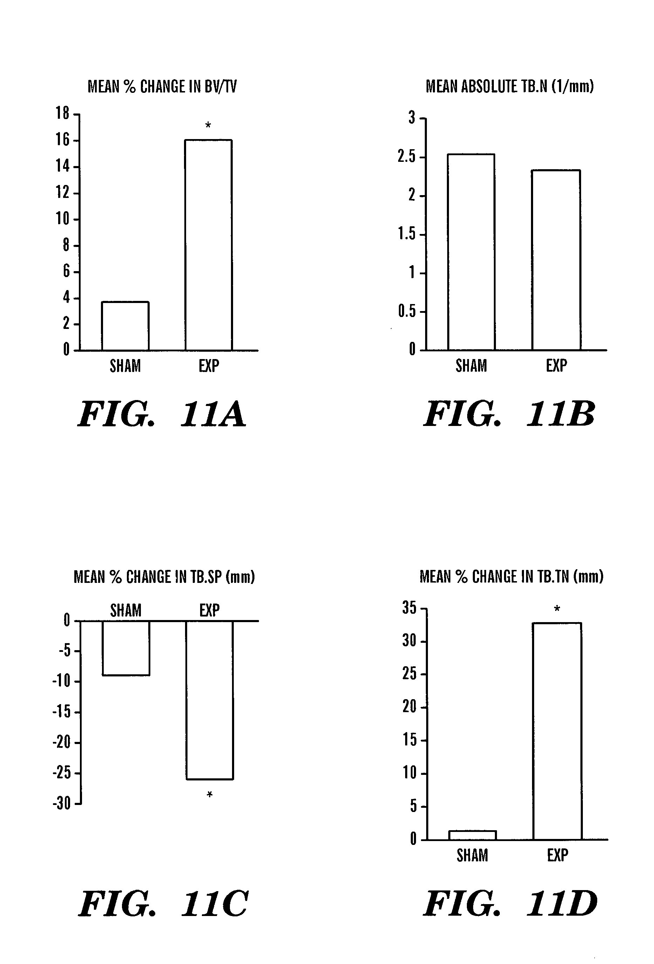

Different parameters were evaluated from microCT analysis of sham and experimental maxilla samples, and graphed as percentage of change from day 0, shown in Figures 11A-11D (* significantly different from the control (p<0.05)). Table 1, below, shows parameters evaluated by microCT Quantitative Analysis.

**Table 1: Parameters Evaluated by MicroCT Quantitative Analysis**

| Indices | Abbreviation | Definition |
|---|---|---|
| Bone Volume Fraction | BV/TV | Relative percentage of bone within 3-D ROI (region of interest) |
| Trabecular number | Tb.N | Quantification of relative number of individual trabeculae within 3-D ROI |
| Trabecular thickness | Tb.Th | Quantification of relative thickness of individual trabeculae within 3-D ROI |
| Trabecular separation | Tb.Sp | Quantification of relative spacing between individual trabeculae within 3-D ROI |

The quantitative analysis of microCT data presented in Figures 11A-11D as a percentage of change from day 0 is shown below in Table 2.

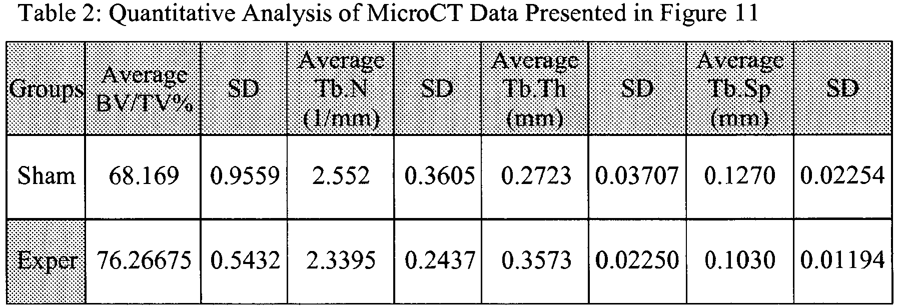

The results demonstrate that the high frequency, low magnitude forces applied to the occlusal surface of molars caused a 16% and 12% increase in the bone volume fraction of maxilla and mandible, respectively. The results of this study demonstrate that high frequency, low magnitude forces when applied through the teeth are able to increase bone osteogenic activity in both maxilla and mandible. This osteogenic activity results in increased bone volume. The increase in bone volume is mostly due to increase in thickness of the trabecular processes. In conclusion, localized high frequency, low magnitude forces applied through teeth increase bone density of alveolar bone.

### Example 2 - High Frequency, Low Magnitude Forces of 60 Hz, 120 Hz, and 200Hz, When Applied Through the Teeth, Are Able to Increase Bone Volume, Increase Trabecular Thickness, and Decrease Inter-trabecular Space

Using the materials and methods described in Example 1, rats were divided into four groups, one receiving vibrations at high frequency at 60 Hz, a second group receiving vibrations at high frequency at 120 Hz, a third group receiving vibrations at high frequency of 200 Hz. All vibration forces had similar low magnitude forces (5 microstrain) applied to upper first molar of the rat maxilla. The fourth group (i.e. the control group) did not receive any vibration. All animals received daily inhalation anesthesia to facilitate application of vibration for 5 minutes.

After day 28, the rats were further sustained for another 4 days without any inhalation anesthesia or vibrations in order to allow complete cellular response to the mechanical stimulus. After the 4 day rest period, all the groups were sacrificed via CO₂ narcosis and the maxillae and mandibles were dissected and fixed in formaldehyde for 48 hours before being stored in 70% ethanol.

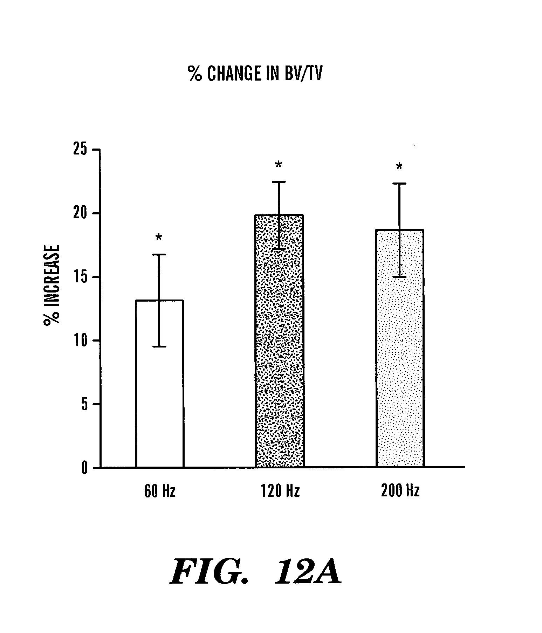

Bone volume/total volume, trabecular thickness, and inter-trabecular space was evaluated from microCT scans as described in Example 1 (these values are defined in Table 1, *supra*). The percentage change shown in Figures 12A-12C is in comparison with the control group (which received no treatment). Each number represents the average from 3 animals ± SD (* significantly different from the control (p<0.05).

Referring to Figure 12A, the results show an increase of bone volume over the control by approximately 13% when 60 Hz frequency vibration was delivered, 19% when 120 Hz frequency vibration was delivered, and 18% when 200 Hz was delivered.

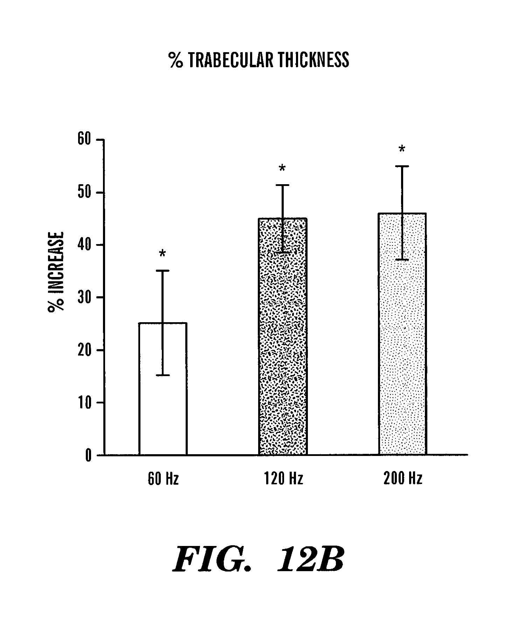

Referring to Figure 12B, the results show an increase in trabecular thickness over the control by approximately 25% when 60 Hz frequency vibration was delivered, 45% when 120 Hz frequency vibration was delivered, and 46% when 200 Hz was delivered.

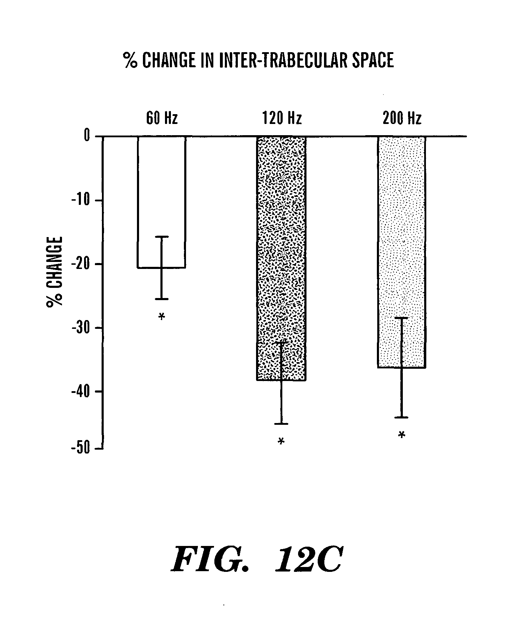

Referring to Figure 12C, the results show a decrease in inter-trabecular space when compared to the control by approximately 21 % when 60 Hz frequency vibration was delivered, 39% when 120 Hz frequency vibration was delivered, and 37% when 200 Hz was delivered.

The results of this experiment demonstrate that high frequency, low magnitude forces, when applied through the teeth are able to increase bone volume, increase trabecular thickness, and decrease inter-trabecular space.

## Claims

1. A bite plate comprising:
a surface suitable for placement in the mouth of a subject between opposed upper and lower teeth;
a hard surfaced protrusion extending from said surface; and
a source of mechanical vibration coupled to said surface and having a design and position effective to permit said hard surfaced protrusion to impart to the subject's teeth a mechanical vibration having a frequency of 100 to 1000 Hz with an acceleration peak of 0.1 to 1.0 g, which produce 1 to 50 microstrain in the jaw and/or teeth.

2. A toothbrush comprising:
an elongate handle;
a plurality of bristles extending from said handle;
a hard surfaced protrusion extending from said handle; and
a source of mechanical vibration coupled to said handle, wherein said source of mechanical vibration has a design and position effective to permit said hard surfaced protrusion to impart to a subject's teeth a mechanical vibration having a frequency of 100 to 1000 Hz with an acceleration peak of 0.1 to 1.0 g, which produce 1 to 50 microstrain in the jaw and/or teeth.

3. A massage device comprising:
a surface suitable for placement relative to a subject's jaw or teeth;
a hard surfaced protrusion extending from said surface; and
a source of mechanical vibration coupled to said surface and having a design and position effective to permit said hard surfaced protrusion to impart to the subject's jaw or teeth a mechanical vibration having a frequency of 100 to 1000 Hz with an acceleration peak of 0.1 to 1.0 g, which produce 1 to 50 microstrain in the jaw and/or teeth.

4. The bite plate of claim 1, the toothbrush of claim 2 or the massage device of claim 3, wherein the source of mechanical vibration imparts to the subject's teeth a mechanical vibration having a frequency of 120 to 250 Hz.

5. The bite plate of claim 1, the toothbrush of claim 2 or the massage device of claim 3, wherein the source of mechanical vibration produces a low magnitude strain of 1 to 30 microstrain.

6. The bite plate of claim 1, the toothbrush of claim 2 or the massage device of claim 3, wherein said hard surfaced protrusion is rubber.

7. The bite plate of claim 1, the toothbrush of claim 2 or the massage device of claim 3, wherein said source of mechanical vibration produces vibration which is horizontal, circular, vertical, or a combination thereof.

8. The bite plate of claim 1, wherein the surface is configured to fit between a pair of opposed upper and lower teeth.

9. The bite plate of claim 1, wherein the surface is configured to fit between a plurality of opposed upper and lower teeth.

10. The bite plate of claim 1, wherein said surface has first and second portions which are detachable from one another with said hard surfaced protrusion being attached to the first portion.

11. The toothbrush of claim 2, wherein said hard surfaced protrusion extends from said handle in generally the same direction as said plurality of bristles but to an extent less than that of said plurality of bristles.

12. The toothbrush of claim 2, wherein said elongated handle has first and second portions which are detachable from one another with said plurality of bristles and said hard surfaced protrusion being attached to the first portion.

13. The massage device of claim 3, wherein said surface has first and second portions which are detachable from one another with said hard surfaced protrusion being attached to the first portion.

14. The bite plate of claim 1, the toothbrush of claim 2 or the massage device of claim 3, wherein the source of mechanical vibration imparts to the subject's teeth a mechanical vibration having a frequency of 120 to 200 Hz.

## Patentansprüche

1. Aufbissplatte, umfassend:
eine zur Platzierung in den Mund einer Person zwischen gegenüberliegenden oberen und unteren Zähnen geeignete Oberfläche;
einen Vorsprung mit harter Oberfläche, der sich von der Oberfläche erstreckt; und
eine an die Oberfläche gekoppelte mechanische Schwingungsquelle und mit einer Gestaltung und Position, die wirksam ist, um zu gestatten, dass der Vorsprung mit harter Oberfläche den Zähnen der Person eine mechanische Schwingung mit einer Frequenz von 100 bis 1000 Hz mit einer Beschleunigungsspitze von 0,1 bis 1,0 g vermittelt, die 1 bis 50 Mikrospannungen im Kiefer und / oder den Zähnen herstellen.

2. Zahnbürste, umfassend:
einen langgestreckten Handgriff;
eine Vielzahl von Borsten, die sich von dem Handgriff erstrecken;
einen Vorsprung mit harter Oberfläche, der sich von der Oberfläche erstreckt; und
eine an die Oberfläche gekoppelte mechanische Schwingungsquelle und mit einer Gestaltung und Position, die wirksam ist, um zu gestatten, dass der Vorsprung mit harter Oberfläche den Zähnen der Person eine mechanische Schwingung mit einer Frequenz von 100 bis 1000 Hz mit einer Beschleunigungsspitze von 0,1 bis 1,0 g vermittelt, die 1 bis 50 Mikrospannungen im Kiefer und / oder den Zähnen herstellen.

3. Massagegerät, umfassend:
eine zur Platzierung relativ zu dem Kiefer oder den Zähnen einer Person geeignete Oberfläche;
einen Vorsprung mit harter Oberfläche, der sich von der Oberfläche erstreckt; und
eine an die Oberfläche gekoppelte mechanische Schwingungsquelle und mit einer Gestaltung und Position, die wirksam ist, um zu gestatten, dass der Vorsprung mit harter Oberfläche den Zähnen der Person eine mechanische Schwingung mit einer Frequenz von 100 bis 1000 Hz mit einer Beschleunigungsspitze von 0,1 bis 1,0 g vermittelt, die 1 bis 50 Mikrospannungen im Kiefer und / oder den Zähnen herstellen.

4. Aufbissplatte nach Anspruch 1, Zahnbürste nach Anspruch 2 oder Massagegerät nach Anspruch 3, wobei die mechanische Schwingungsquelle den Zähnen der Person eine mechanische Schwingung mit einer Frequenz von 120 bis 250 Hz vermittelt.

5. Aufbissplatte nach Anspruch 1, Zahnbürste nach Anspruch 2 oder Massagegerät nach Anspruch 3, wobei die mechanische Schwingungsquelle eine Spannung geringer Höhe von 1 bis 30 Mikrospannungen herstellt.

6. Aufbissplatte nach Anspruch 1, Zahnbürste nach Anspruch 2 oder Massagegerät nach Anspruch 3, wobei der Vorsprung mit harter Oberfläche Gummi ist.

7. Aufbissplatte nach Anspruch 1, Zahnbürste nach Anspruch 2 oder Massagegerät nach Anspruch 3, wobei die mechanische Schwingungsquelle eine Schwingung herstellt, die horizontal, kreisförmig, vertikal, oder eine Kombination davon ist.

8. Aufbissplatte nach Anspruch 1, wobei die Oberfläche konfiguriert ist, um zwischen ein Paar von gegenüberliegenden oberen und unteren Zähnen zu passen.

9. Aufbissplatte nach Anspruch 1, wobei die Oberfläche konfiguriert ist, um zwischen eine Vielzahl von gegenüberliegenden oberen und unteren Zähnen zu passen.

10. Aufbissplatte nach Anspruch 1, wobei die Oberfläche erste und zweite Teile hat, die voneinander lösbar sind, wobei der Vorsprung mit harter Oberfläche an dem ersten Teil befestigt ist.

11. Zahnbürste nach Anspruch 2, wobei der Vorsprung mit harter Oberfläche sich von dem Handgriff in allgemein in derselben Richtung wie die Vielzahl von Borsten erstreckt aber mit einem geringeren Ausmaß als die Vielzahl von Borsten.

12. Zahnbürste nach Anspruch 2, wobei der langgestreckte Handgriff erste und zweite Teile hat, die voneinander mit der Vielzahl von Borsten lösbar sind und der Vorsprung mit harter Oberfläche und dem ersten Teil befestigt ist.

13. Massagegerät nach Anspruch 3, wobei die Oberfläche erste und zweite Teile hat, die voneinander lösbar sind, wobei der Vorsprung mit harter Oberfläche an dem ersten Teil befestigt ist.

14. Aufbissplatte nach Anspruch 1, Zahnbürste nach Anspruch 2 oder Massagegerät nach Anspruch 3, wobei die mechanische Schwingungsquelle den Zähnen der Person eine mechanische Schwingung mit einer Frequenz von 120 bis 200 Hz vermittelt.

## Revendications

1. Plaque de bille à mordre comprenant :
une surface adaptée pour le placement dans la bouche d'un sujet entre les dents supérieures et inférieures opposées ;
une protrusion à surface dure s'étendant à partir de ladite surface ; et
une source de vibration mécanique couplée à ladite surface et ayant une conception et
une position efficaces pour permettre à ladite protrusion à surface dure d'impartir aux dents du sujet une vibration mécanique ayant une fréquence de 100 à 1 000 Hz avec un pic d'accélération de 0,1 à 1,0 g, qui produisent de 1 à 50 microdéformations dans la mâchoire et/ou les dents.

2. Brosse à dents comprenant :
une poignée allongée ;
une pluralité de poils s'étendant à partir de ladite poignée ;
une protrusion à surface dure s'étendant de ladite poignée ; et
une source de vibration mécanique couplée à ladite poignée, dans laquelle ladite source de vibration mécanique couplée à ladite poignée a une conception et une position efficaces pour permettre à ladite protrusion à surface dure d'impartir aux dents du sujet une vibration mécanique ayant une fréquence de 100 à 1 000 Hz avec un pic d'accélération de 0,1 à 1,0 g, qui produisent de 1 à 50 microdéformations dans la mâchoire et/ou les dents.

3. Dispositif de massage comprenant :
une surface adaptée pour le placement relativement à la mâchoire ou aux dents d'un sujet ;
une protrusion à surface dure s'étendant à partir de ladite surface ; et
une source de vibration mécanique couplée à ladite surface et ayant une conception et
une position efficaces pour permettre à ladite protrusion à surface dure d'impartir à la mâchoire ou aux dents du sujet une vibration mécanique ayant une fréquence de 100 à 1 000 Hz avec un pic d'accélération de 0,1 à 1,0 g, qui produisent de 1 à 50 microdéformations dans la mâchoire et/ou les dents.

4. Plaque de bille à mordre selon la revendication 1, brosse à dents selon la revendication 2 ou dispositif de massage selon la revendication 3, dans lesquels la source de vibration mécanique impartit aux dents du sujet une vibration mécanique ayant une fréquence de 120 à 250 Hz.

5. Plaque de bille à mordre selon la revendication 1, brosse à dents selon la revendication 2 ou dispositif de massage selon la revendication 3, dans lesquels la source de vibration mécanique produit une déformation de faible amplitude de 1 à 30 microdéformations.

6. Plaque de bille à mordre selon la revendication 1, brosse à dents selon la revendication 2 ou dispositif de massage selon la revendication 3, dans lesquels ladite protrusion à surface dure est en caoutchouc.

7. Plaque de bille à mordre selon la revendication 1, brosse à dents selon la revendication 2 ou dispositif de massage selon la revendication 3, dans lesquels ladite source de vibration mécanique produit une vibration qui est horizontale, circulaire, verticale ou une de leurs combinaisons.

8. Plaque de bille à mordre selon la revendication 1, dans laquelle la surface est configurée pour s'ajuster entre une paire de dents supérieures et inférieures opposées.

9. Plaque de bille à mordre selon la revendication 1, dans laquelle la surface est configurée pour s'ajuster entre une pluralité de dents supérieures et inférieures opposées.

10. Plaque de bille à mordre selon la revendication 1, dans laquelle ladite surface a une première et une deuxième parties qui sont détachables l'une de l'autre, ladite protrusion à surface dure étant attachée à la première partie.

11. Brosse à dents selon la revendication 2, dans laquelle ladite protrusion à surface dure s'étend à partir de ladite poignée dans généralement la même direction que ladite pluralité de poils mais à un degré inférieur à celle de ladite pluralité de poils.

12. Brosse à dents selon la revendication 2, dans laquelle ladite poignée allongée a une première et une seconde parties qui sont détachables l'une de l'autre avec ladite pluralité de poils et ladite protrusion à surface dure étant attachée à la première partie.

13. Dispositif de massage selon la revendication 3, dans lequel ladite surface a une première et une seconde partie qui sont détachables l'une de l'autre avec ladite protrusion à surface dure qui est attachée à la première partie.

14. Plaque de bille à mordre selon la revendication 1, brosse à dents selon la revendication 2 ou dispositif de massage selon la revendication 3, dans lesquels la source de vibration mécanique impartit aux dents du sujet une vibration mécanique ayant de 120 à 200 Hz.
